# EUROPEAN PATENT APPLICATION

(11) **EP 2 442 530 A1**
(43) Date of publication of application: **18.04.2012**
(21) Application number: 10187710.8
(22) Date of filing: 15.10.2010
(51) Int. Cl.: H04L 29/08

(54) **Arrangement and method for providing data to a user**

(71) Applicant: TELEFONAKTIEBOLAGET LM ERICSSON (publ), 164 83 Stockholm (SE)
(72) Inventor: Gecer, Bulent, 112 54, Stockholm (SE); Åström, Bo, 117 59, Stockholm (SE)
(74) Representative: Strandin, Heléne

(57) **Abstract**

A data retrieving node and a method in a data retrieving node in a communication system are provided for providing information on activities and situation of a user to a Complex Event Processing (CEP) engine. The data retrieving node comprises a communication unit adapted to receive an event initiation notification, which event initiation notification comprises an identification of the user. The data retrieving node further comprises a processing unit adapted to, in response to the event notification, request and obtain data relating to the user, from a plurality of data nodes, via the communication unit. The processing unit is further adapted to provide the obtained data to the CEP engine in one or more data streams via the communication unit.

## Description

### Technical field

The invention relates generally to providing data or information to a user. The present invention relates in particular to data retrieving node and a method in a data retrieving node in a communication network adapted to provide information on activities and situation of a user to a Complex Event Processing (CEP) engine.

### Background

In today's ever increasing flow of information, it becomes more and more important to provide information to individuals, such as a user in a communication network, which information is relevant to or for such a user. In order to identify which kind of information might be of interest to a user, it may be helpful to analyze the behavior of the user, such as what activities he or she has performed in the past.

As an example, in order to suggest a web page that might be of interest to the user, looking at his/her previously visited web pages might be helpful in identifying other web pages that might be of interest to the user.

As another example, in order to provide advertisements to a user, it might be helpful to analyze what kind of products the user has previously bought, where the user is currently located and other relevant information about the user, to be able to provide advertisement which has a high probability of being relevant for the user.

Different approaches have been made to efficiently and reliably gather useful information about the user in order to identify information which may be of interest to him/her.

### Summary

It is an object of the exemplary embodiments to improve data processing in order to identify information relevant to a user. In particular, it is an object of the exemplary embodiments to provide efficient real time processing of data in order to identify data that might be of interest to a user. These objects and others may be obtained by providing a data retrieving node and a method in a data retrieving node according to the independent claims attached below.

According to one aspect, a data retrieving node in a communication network is provided, which node is adapted to provide information on activities and situation of a user to a Complex Event Processing, CEP, engine. The data retrieving node comprises a communication unit, which is adapted to receive an event initiation notification, which event initiation notification comprises an identification of the user. The data retrieving node further comprises a processing unit adapted to, in response to the event notification, request and obtain data relating to the user, from a plurality of data nodes, via the communication unit. The processing unit is further adapted to provide the obtained data to the CEP engine in one or more data streams via the communication unit.

In an embodiment, the event notification is received from the CEP engine, a GGSN (GPRS Gateway Support Node) or an Application monitoring the user.

In one embodiment, if data is requested and obtained from a plurality of data nodes, the communication unit is adapted to provide an individual data stream for data obtained from each of the plurality of data nodes.

In still an embodiment, the communication unit is further adapted to receive an event termination notification, and wherein the processing unit is further adapted to request termination of reception of data from the plurality of data nodes.

According to an aspect, a method in a data retrieving node in communication network, for providing information on activities and situation of a user to a Complex Event Processing (CEP) engine is provided. The method comprises receiving an event initiation notification, which event initiation notification comprises an identification of the user. The method further comprises requesting and obtaining data relating to the user, from a plurality of data nodes and then providing the obtained data to the CEP engine in one or more data streams.

In an embodiment, the event notification is received from the CEP engine, a GGSN or an Application monitoring the user.

In one embodiment, if data is requested and obtained from a plurality of data nodes, the method comprises providing an individual data stream for data obtained from each of the plurality of data nodes.

In still an embodiment, the method further comprises receiving an event termination notification, wherein termination of reception of data from the plurality of data nodes is requested.

The data retrieving node and the method in a data retrieving node have the advantage that the CEP need not request or poll for required information. By introducing the data retrieving node, the CEP will be fed with data streams so that the CEP may function optimally. The identification of the user which is comprised in the event notification will be used by the processing unit when requesting data relating to the user. By using a CEP engine in a communication network, a large amount of data may be rapidly and efficiently processed in order to find data which may be if interest to the user.

### Brief description of drawings

The invention will now be described in more detail by means of exemplary embodiments and with reference to the accompanying drawings, in which:

Figure 1 is a block diagram of a Data Retrieving Node in a communication network.

Figure 2 is a flow chart of a method in a Data Retrieving Node in a communication network.

Figure 3 is a signaling diagram illustrating an example of a method in a Data Retrieving Node.

### Detailed description

Complex Event Processing, CEP, is developed for analysis of a continuous stream of data to find patterns in information. It has been used in the financial industry for trading and risk management. Data from many different sources are fed into a CEP engine, which can combine the real-time feed of data with historical data. In a data processing perspective, the CEP can be used as part of an Extract Transform Load (ETL) process to make a first selection of interesting data from a larger set of data. CEP applies static rules on dynamic data.

According to the invention, CEP engine functionality is incorporated into a communication network in order to process data. Processing of data comprises handling input current data in combination with historical data, and it can be used to develop user profiling and other analytical application.

The CEP engine has been developed to being fed with events as they occur, in data streams. In this respect, the CEP engine is not optimized to work in a request-response mode or to poll for required information.

It has been recognized that in order for the CEP engine to function at its best, it needs to be fed with data streams of information instead of having to poll for the required information.

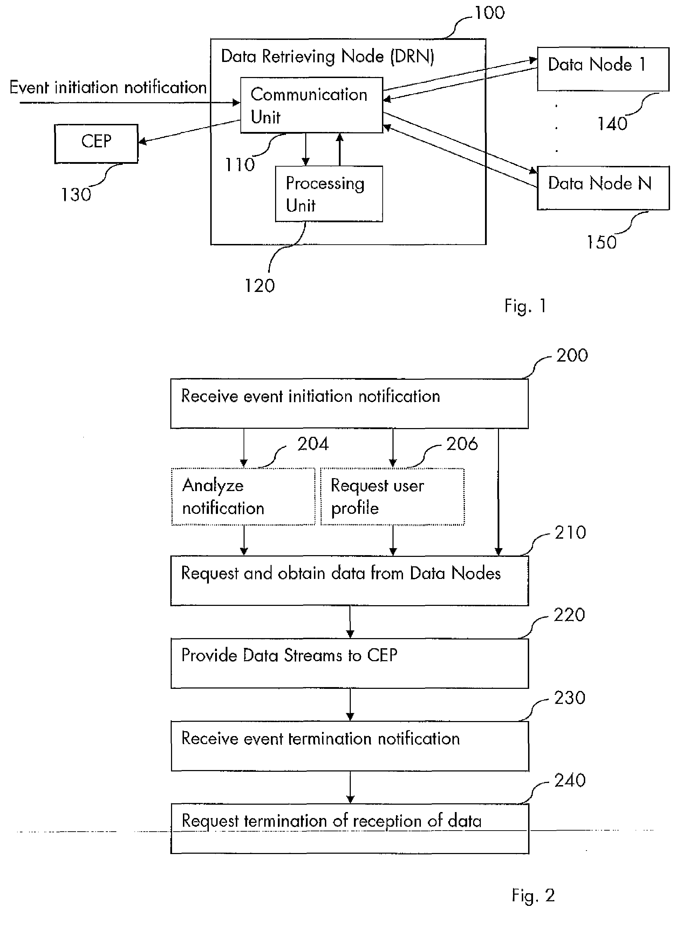

Figure 1 is a block diagram of a Data Retrieving Node 100 in a communication network.

The Data Retrieving Node 100 is adapted to provide information on activities and situation of a user to a Complex Event Processing (CEP) engine 130. The data retrieving node comprises a communication unit 110, which is adapted to receive an event notification. The event notification comprises an identification of the user. The data retrieving node further comprises a processing unit 120, which is adapted to, in response to the event notification, request and obtain data relating to the user, from a plurality of data nodes 140-150, via the communication unit. The processing unit is further adapted to provide the obtained data to the CEP engine in one or more data streams via said communication unit.

This has the advantage that the CEP need not request or poll for required information. By introducing the data retrieving node, the CEP will be fed with data streams so that the CEP may function optimally. The identification of the user which is comprised in the event notification will be used by the processing unit when requesting data relating to the user.

The communication network can be a packet-switched communication network or a circuit-switched communication network. A data node 140-150 can be any node from which data can be fetched, obtained and/or retrieved. The data may be persistent data and/or dynamic data.

In an embodiment of the data retrieving node 100, the event notification is received from the CEP engine 130, a Gateway GPRS Support Node (GGSN) (not shown) or an Application monitoring the user (not shown).

In an exemplary embodiment wherein data is requested from a plurality of data nodes 140-150, the communication unit 110 is adapted to provide an individual data stream for data obtained from each of the plurality of data nodes.

As an example, assume that the communication unit 110 requests data from five different data nodes. Then the communication unit will provide five different data streams to the CEP 130.

In an example, wherein the event notification is received from the CEP engine 130 or the GGSN, the event notification is triggered by a device setting up or activating a PDP context. The device being operated by the user.

In an IMS environment, one function of the GGSN is to connect the device to external data networks, where IP-based applications and services are available. When a user of the device whishes to make use of such an application or service, the device activates a bearer towards an access point, such a bearer being e.g. a PDP context. The GGSN will allocate a dynamic IP address for the device. In this example, the GGSN may also send an event notification to the data retrieving node. Alternatively, the GGSN may send the event notification to the CEP, which in turn will send it or a corresponding event notification to the data retrieving node.

In an example, wherein if the event notification is received from the Application monitoring the user, the event notification is triggered by a device performing an attach to the communication network. The device being operated by the user.

In an embodiment, the communication unit 110 is further adapted to receive an event termination notification. In this embodiment, the processing unit 120 is still further adapted to request termination of reception of data from the plurality of data nodes 140-150 from which it has previously requested and obtained data.

In an example, the processing unit 120 is adapted to analyze the event notification. Dependent upon the result of the analysis, the processing unit will identify at least one of the plurality of data nodes 140-150 in relation to the event notification. Only the identified data node(s) will be requested for data.

The analysis may comprise looking at the type of event notification. Different types of event notifications may indicate which specific data nodes should be requested for data. The analysis may comprise looking at different parameters that may be comprised in the event notification. The different parameters may in such a case indicate which specific nodes should be requested for data.

In an example, the processing unit 120 is adapted to request and obtain data from a plurality of predetermined data nodes 140-150 upon reception of the event notification.

In this example, the data nodes 140-150 from which data is requested are predetermined. This means that whenever an event notification is received, the processing unit 120 will request information from a plurality of predetermined data nodes 140-150. No analysis of the event notification will be necessary as the processing unit will request information from the same data nodes every time an event notification is received.

In an example, the processing unit 120 is adapted to inquire a node (not shown) comprising user profiles for a service profile of the user, upon receipt of the event notification. The processing unit is then further adapted to request and obtain data from at least one of the plurality of data nodes in relation to the service profile.

In this example, as the processing unit 120 receives the event notification, it will use the identification of the user, comprised in the event notification, to first request a service profile of the user. The service profile may in this example identify which data nodes should be requested for data. Then the processing unit will request those data nodes for data. As the processing unit obtains data from the data nodes, the processing unit will provide the obtained data in data streams to the CEP, via the communication interface.

In an example, the node comprising user profiles is a Home Subscriber Subsystem (HSS) or a Home Location Register (HLR).

Another example of a node comprising user profiles is a Customer Relationship Management Node.

The data retrieving node can be seen as a node which requests and obtains data in order to provide the CEP engine with data streams. The data retrieving node may be a separate node or it may be comprised in another node.

Figure 2 is a flow chart of a method in a Data Retrieving Node in a communication network for providing information on activities and situation of a user to a CEP engine.

The method has the same objects and advantages as the data retrieving node. For sake of simplicity, the method will be only briefly described.

Figure 2 shows the method for providing information on activities and situation of a user to a CEP engine comprising receiving 200 an event initiation notification, which event initiation notification comprises an identification of a user. The method further comprises requesting and obtaining 210 data relating to the user, from a plurality of data nodes. Further still, the method comprises 220 providing said obtained data to said CEP engine in one or more data streams.

In an embodiment of the method, the event notification is received 200 from said CEP engine, a GGSN or an Application monitoring the user.

In an example, if data is requested and obtained 210 from a plurality of data nodes, the method comprises providing 220 an individual data stream for data obtained from each of the plurality of data nodes.

According to an embodiment, if the event notification is received 200 from the CEP engine or the GGSN, it is triggered by a device setting up or activating a PDP context. The device being operated by the user.

In an example, wherein if the event notification is received 200 from the application monitoring the user, the event notification is triggered by a device performing an attach to the communication network. The device being operated by the user.

In yet an example, the method further comprises receiving 230 an event termination notification, wherein termination of reception of data from the plurality of data nodes is requested 240.

In an example, the method further comprises analyzing 204 the event initiation notification. Dependent on the result of the analysis, at least one of the plurality of data nodes is identified in relation to the event initiation notification.

In yet an example, the method further comprises requesting and obtaining 210 data from a plurality of predetermined data nodes upon reception of the event initiation notification.

According to an embodiment, the method further comprises inquiring 206 a node comprising user profiles for a service profile of the user, upon receipt of the event initiation notification. The method still further comprises requesting and obtaining 210 data from at least one of the plurality of data nodes in relation to the service profile.

In an example, the node comprising user profiles is a Home Subscriber Subsystem, HSS or a Home Location Register, HLR.

Another example of a node comprising user profiles is a Customer Relationship Management Node.

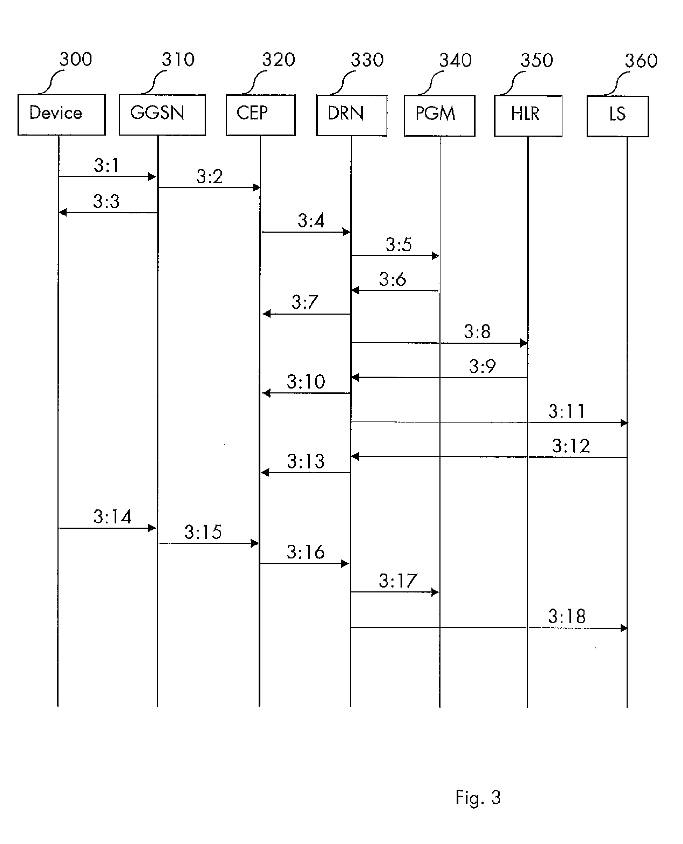

Figure 3 is a signaling diagram illustrating an example of a method in a Data Retrieving Node.

This shall be seen as a non-limiting example to illustrate the method. In this example, three data nodes are requested for data by the data retrieving node using the method in the data retrieving node (DRN) 100, 330. The three data nodes will all three respond by providing data to the data retrieving node. The three nodes in this illustrative example are a Presence and Group Management (PGM) node 340, an HLR 350 and a Location Service (LS) node 360.

In this example, the data retrieving node 330 is illustrated as a separate node. However, as has been explained above, the data retrieving node may be incorporated into another node.

This example shows a real time processing of HTTP traffic. The example starts by a user of a device 300 establishing or activating a PDP context. HTTP traffic is continuously fed into the CEP as it occurs and the CEP combines the HTTP traffic with other data about the user. In this example, HTTP traffic is combined with location, call status and Presence. By combining the current HTTP traffic with location, call status and Presence, it is possible to design an application that will send an advertisement to the user of the device.

Depending on what kind of web page the user is visiting or accessing, where the user is located and whether the user is involved in a call, one or more advertisements that may be of interest to the user can be sent to the device.

The example starts by a user wanting to access or visit a web page. Firstly, the user creates a PDP context. This is done by sending **3:1** a create_pdp_context from the device 300 to the GGSN 310.

The GGSN 310 keeps a list of Radius Servers to which it shall send a Radius start_accounting message, and the CEP 320 is included in this list. The Mobile Subscriber ISDN number (MSISDN) and the allocated IP address are included in the start_accounting message. Thus the start_accounting message is sent **3:2** to the CEP. When the CEP receives the message, the CEP creates a session for this user.

The GGSN also responds **3:3** to the PDP establishment request from the device 300, with pdp_context, including e.g. the assigned IP address. The response is sent **3:3** back to the requesting device 300.

The CEP 320 sends **3:4** an event to the DRN 330 indicating that it would like to get profile data information (subscriber/user information) delivered as live streams. In this example, the profile data information comprises location, presence and call status of the user. The sent event **3:4** corresponds to the event notification message described above in relation to figures 1 and 2.

Even though this is just an illustrative example, it shall be pointed out that the GGSN 310 alternatively could send the start_accounting message directly to the DRN 330, or a corresponding event notification message, not having to go via the CEP 320.

With reference to figure 3, the DRN 330 sets up **3:5** a SIP subscription towards the PGM 340 to be able to receive notification about the user's presence updates. This is done by the DRN sending **3:5** a SIP subscribe message in this example.

The DRN 330 immediately receives **3:6** the first presence notification for the user in a SIP notify message.

As the DRN 330 receives **3:6** the first presence notification for the user, it initiates **3:7** a data stream from the DRN 330 to the CEP. In this way, every time the DRN receives a notification with new presence data from the PGM 340 for the user, the same data will be flowing **3:7** through the data stream to the CEP 320. The data will is fed to the CEP 320 as a data stream e.g. by using File Transfer Protocol (FTP).

Next in the example, the DRN 330 requests **3:8** Call Status of the user from the HLR 350 by sending **3:8** a MAP Any Time Interrogation (ATI). As the HLR receives the MAP ATI, the HLR proceeds by invoking a Provide Subscriber Information in the MSC/VLR where the subscriber is located, to obtain the call status (idle/busy). The MSC/VLR is the Mobile Switching Center/Visitor Location Register.

The HLR 350 responds **3:9** to the DRN 330 with the Call Status Data. The DRN feeds **3:10** this data into the CEP as a data stream, e.g. by using FTP.

The DRN then proceeds by requesting **3:11** the Location of the user from the Location Server (LS) 360. This can be done e.g. by using the Mobile Location Protocol (MLP). Other positioning protocols may also be used.

The LS 360 responds **3:12** with the current location to the DRN 330. The DRN 330 feeds **3:13** this data into the CEP as a data stream, e.g. by using FTP. If the positioning technique used by the LS 360 provides continuous location reporting, e.g. by using A-GPS (Assisted - Global Positioning System), the DRN 330 continuously streams updates to the CEP 320 when updates are received from the LS 360.

The CEP now continuously receives data streams providing the CEP with information about the user and his/her activities.

At some point, the user decides to stop surfing the Internet and the PDP context is torn down. A tear_down_pdp_context request is sent **3:14** from the device 300 to the GGSN 310.

The GGSN 310 informs **3:15** the CEP 320 that the PDP context has been torn down by sending **3:15** a stop_accounting message to the CEP 320.

The CEP 320 sends **3:16** an event termination notification message to the DRN 330 indicating that the CEP 320 does not want to receive any more profile data streams for the specific user.

Again, this is merely intended to be an illustrative example. Alternatively, the GGSN 310 could send an event termination notification message directly to the DRN 330, not having to go via the CEP 320.

Again, with reference to figure 3, the DRN 330 terminates **3:17** the Presence subscription towards the PGM 340. This is done e.g. by sending **3:17** a SIP Terminate Presence subscription message to the PGM.

The DRN 330 also terminates **3:18** the Location subscription towards the LS 360. This is done e.g. by sending **3:18** a MLP Terminate Location subscription message to the LS 360.

By arranging a data retrieving node, DRN 330, and a corresponding method therein, the CEP 320 need not poll for information by executing request-response procedures towards the nodes from which the CEP whishes to receive information. To the contrary, the DRN will perform the necessary request-response procedures and provide the information to the CEP in one or more data streams.

It should be noted that figure 1 merely illustrates various functional units in the data retrieving node in a logical sense. However, the skilled person is free to implement these functions in practice using any suitable software and hardware means. Thus, the invention is generally not limited to the shown structures of the data retrieving node and the functional units.

While the invention has been described with reference to specific exemplary embodiments, the description is generally only intended to illustrate the inventive concept and should not be taken as limiting the scope of the invention. The present invention is defined by the appended claims.

## Claims

1. A data retrieving node (100, 330) in a communication network adapted to provide information on activities and situation of a user to a Complex Event Processing, CEP, engine (130, 320), the data retrieving node comprising:
- a communication unit (110) adapted to receive an event initiation notification, which event initiation notification comprises an identification of said user,
- a processing unit (120) adapted to, in response to said event notification, requesting and obtaining data relating to said user, from a plurality of data nodes (140-150, 340-360), via said communication unit,
wherein said processing unit is further adapted to provide said obtained data to said CEP engine in one or more data streams via said communication unit.

2. A data retrieving node (100, 330) in a communication network according to claim 1, wherein said event notification is received from said CEP engine (130, 320), a GGSN (310) or an Application monitoring said user.

3. A data retrieving node (100, 330) in a communication network according to claim 1 or 2, wherein if data is requested and obtained from a plurality of data nodes (140-150, 340-360), said communication unit (110) is adapted to provide an individual data stream for data obtained from each of said plurality of data nodes.

4. A data retrieving node (100, 330) in a communication network according to any of claims 1-3, wherein said communication unit (110) is further adapted to receive an event termination notification, and wherein said processing unit (120) is further adapted to request termination of reception of data from said plurality of data nodes (140-150, 340-360).

5. A data retrieving node (100, 330) in a communication network according to any of claims 1-4, wherein said processing unit (120) is adapted to analyze said event initiation notification and dependent on the result of said analysis, said processing unit will identity at least one of said plurality of data nodes (140-150, 340-360) in relation to said event initiation notification.

6. A data retrieving node (100, 330) in a communication network according to any of claims 1-4, wherein said processing unit (120) is adapted to request and obtain data from a plurality of predetermined data nodes (140-150, 340-360) upon reception of said event initiation notification.

7. A data retrieving node (100, 330) in a communication network according to any of claim 1-6, wherein said processing unit (120) is adapted to inquire a node comprising user profiles for a service profile of said user, upon receipt of said event initiation notification, wherein said processing unit is adapted to request and obtain data from at least one of said plurality of data nodes (140-150, 340-360) in relation to said service profile.

8. A data retrieving node (100, 330) in a communication network according to claim 7, wherein said node comprising user profiles is a Home Subscriber Subsystem, HSS or a Home Location Register, HLR.

9. A method in a data retrieving node in communication network, for providing information on activities and situation of a user to a Complex Event Processing, CEP, engine comprising:
- receiving (200, 3:4) an event initiation notification, which event initiation notification comprises an identification of said user,
- requesting and obtaining (210, 3:5, 3:6, 3:8, 3:9, 3:11, 3:12) data relating to said user, from a plurality of data nodes,
- providing (220, 3:7, 3:10, 3:13) said obtained data to said CEP engine in one or more data streams.

10. A method in a data retrieving node in a communication network according to claim 9, wherein said event notification is received from said CEP engine, a GGSN or an Application monitoring said user.

11. A method in a data retrieving node according to claim 9 or 10, wherein if data is requested and obtained from a plurality of data nodes, the method comprises providing an individual data stream for data obtained from each of said plurality of data nodes.

12. A method according to any of claims 9-11 further comprising receiving (230, 3:16) an event termination notification, wherein termination of reception of data from said plurality of data nodes is requested (240, 3:17, 3:18).

13. A method according to any of claims 9-12, further comprising analyzing (204) said event initiation notification and dependent on the result of said analysis, identifying at least one of said plurality of data nodes in relation to said event initiation notification.

14. A method according to any of claims 9-12, further comprising requesting and obtaining (210, 3:5, 3:6, 3:8, 3:9, 3:11, 3:12) data from a plurality of predetermined data nodes upon reception (200, 3:4) of said event initiation notification.

15. A method according to any of claims 9-14, further comprising inquiring (206) a node comprising user profiles for a service profile of said user, upon receipt (200, 3:4) of said event initiation notification, wherein said method further comprises requesting and obtaining (210, 3:5, 3:6, 3:8, 3:9, 3:11, 3:12) data from at least one of said plurality of data nodes in relation to said service profile.

16. A method according to claim 15, wherein said node comprising user profiles is a Home Subscriber Subsystem, HSS or a Home Location Register, HLR.
